# EUROPEAN PATENT APPLICATION

(11) **EP 4 550 003 A1**
(43) Date of publication of application: **07.05.2025**
(21) Application number: 22949509.8
(22) Date of filing: 27.12.2022
(51) Int. Cl.: G01T 1/20

(54) **RADIATION DETECTOR**

(30) Priority: 29.06.2022 JP 2022104496
(71) Applicant: Canon Electron Tubes & Devices Co., Ltd., Otawara-shi, Tochigi 324-0036 (JP)
(72) Inventor: UEDA, Yuusuke, Otawara-shi, Tochigi 324-0036 (JP); AIDA, Hiroshi, Otawara-shi, Tochigi 324-0036 (JP); IZUMI, Takashi, Otawara-shi, Tochigi 324-0036 (JP)
(74) Representative: Henkel & Partner mbB
(86) International application number: PCT/JP2022/048375
(87) International publication number: WO 2024/004236

(57) **Abstract**

Provided is a radiation detector that is able to suppress the arrival of moisture on a scintillator layer. This radiation detector comprises a photoelectric conversion substrate, the scintillator layer, a frame-like sealing part adhered to the photoelectric conversion substrate, a moisture-proof cover, and a light reflection layer. The light reflection layer is provided between the scintillator layer and the moisture-proof cover, is fixed to the moisture-proof cover, and is positioned in at least a detection region of the photoelectric conversion substrate. The moisture-proof cover is adhered directly to the sealing part and covers the scintillator layer as well as the photoelectric conversion substrate and the sealing part.

## Description

### Technical Field

Embodiments described herein relate generally to a radiation detector.

### Background Art

X-ray image detectors are known as X-ray diagnostic imaging devices replaced with X-ray films. In recent years, the use of X-ray image detectors has been increasing. Compared to the X-ray films, the X-ray image detectors have advantages that the time from taking X-ray photographs to confirmation of the images is very short, an image dynamic range is wide, and no chemicals necessary for film development are required.

Most of the X-ray image detectors currently in practical use convert an X-ray image transmitted through a human body or the like into visible light, in a scintillator layer inside the X-ray image detector, and the converted visible light image is converted into an electrical signal by a plurality of photo-electric conversion sections arranged in a grating pattern on an array substrate, and image information generated based on the converted electrical signal is output to the outside.

### Citation List

### Patent Literature

Patent Literature 1: JP 2010-145351 A

### Summary of Invention

### Technical Problem

Embodiments described herein aim to provide a radiation detector capable of suppressing moisture reaching a scintillator layer.

### Solution to Problem

According to one embodiment, there is provided a radiation detector comprising: a photo-electric conversion substrate including a detection area and a non-detection area outside the detection area; a scintillator layer provided on the photo-electric conversion substrate and located in at least the detection area; a frame-shaped sealant located in the non-detection area, surrounding the scintillator layer, and adhered to the photo-electric conversion substrate; a moisture-proof cover provided above the scintillator layer and located in the detection area and the non-detection area; and a light reflective layer provided between the scintillator layer and the moisture-proof cover, fixed to the moisture-proof cover, and located in at least the detection area. The moisture-proof cover is directly adhered to the sealant, and covers the scintillator layer together with the photo-electric conversion substrate and the sealant.

### Brief Description of Drawings

FIG. 1 is a cross-sectional view showing an X-ray detector according to a first comparative example.
FIG. 2 is a perspective view showing a support substrate, an X-ray detection panel, a circuit board, and a plurality of FPCs of the X-ray detector, and also showing an image transmission unit.
FIG. 3 is an enlarged sectional view showing a part of an X-ray detection module of the X-ray detector.
FIG. 4 is a plan view showing the X-ray detection module.
FIG. 5 is a cross-sectional view showing a part of the X-ray detection module of FIG. 4 along line V-V.
FIG. 6 is a plan view showing an X-ray detection module of an X-ray detector according to a second comparative example.
FIG. 7 is a cross-sectional view showing a part of the X-ray detection module of FIG. 6 along line VII-VII.
FIG. 8 is an enlarged sectional view showing a part of the X-ray detection module according to the second comparative example, and also showing a scintillator layer, a light reflective layer, and a moisture-proof cover.
FIG. 9 is an enlarged sectional view showing a part of an X-ray detection module of an X-ray detector according to an embodiment.
FIG. 10 is a plan view showing the X-ray detection module according to the embodiment.
FIG. 11 is a cross-sectional view showing a part of the X-ray detection module of FIG. 10 along line XI-XI.

Mode for Carrying Out the Invention Embodiments and comparative examples will be described hereinafter with reference to the accompanying drawings. The disclosure is merely an example, and proper changes within the spirit of the invention, which are easily conceivable by a person of ordinary skill in the art, are included in the scope of the invention as a matter of course. In addition, in some cases, in order to make the description clearer, the widths, thicknesses, shapes and the like, of the respective parts are schematically illustrated in the drawings, compared to the actual modes. However, the schematic illustration is merely an example, and adds no restriction to the interpretation of the invention. Besides, in the specification and drawings, the same elements as those described in connection with preceding drawings are denoted by like reference numbers, and a detailed description thereof is omitted unless necessary.

### (First comparative example)

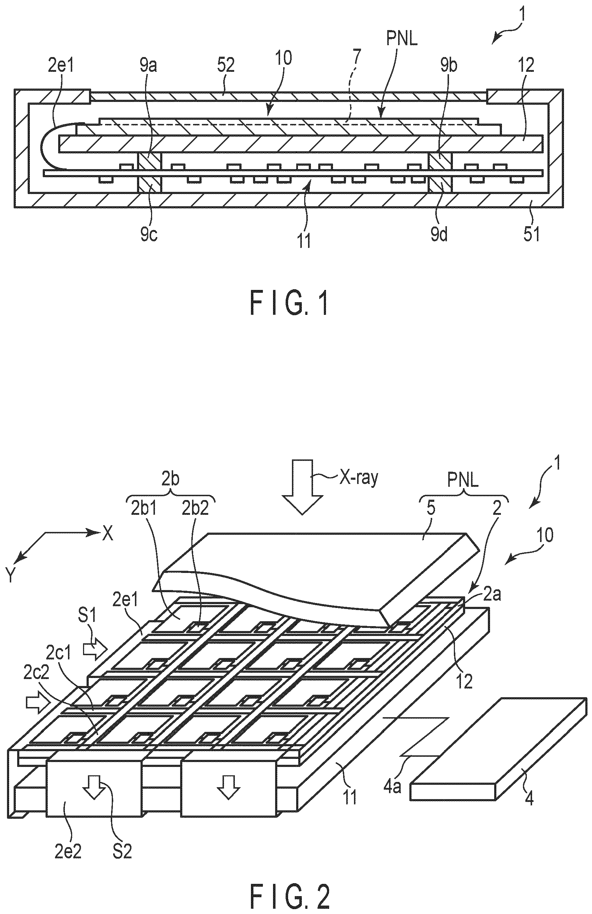

First, a first comparative example will be described. FIG. 1 is a cross-sectional view showing an X-ray detector 1 according to the first comparative example. The X-ray detector 1 is an X-ray image detector, and is an X-ray flat panel detector using an X-ray detection panel.

As shown in FIG. 1, the X-ray detector 1 comprises an X-ray detection module 10, a support substrate 12, a circuit board 11, spacers 9a, 9b, 9c, and 9d, a housing 51, a flexible printed circuit (FPC) 2e1, an incident window 52, and the like. The X-ray detection module 10 includes an X-ray detection panel PNL. The X-ray detection panel PNL is located between the support substrate 12 and the incident window 52. The X-ray detection panel PNL includes a moisture-proof cover 7 facing the incident window 52.

The incident window 52 is attached to an opening of the housing 51. The incident window 52 transmits X-rays. For this reason, the X-rays are transmitted through the incident window 52 and made incident on the X-ray detection module 10. The incident window 52 is formed in a plate shape and has a function of protecting the inside of the housing 51. The incident window 52 is desirably formed of a material with a low X-ray absorption rate and formed to be thin. The scattering of the X-rays and the attenuation of the X-ray dose that occur at the incident window 52 can be thereby reduced. Then, a thin and lightweight X-ray detector 1 can be realized.

The X-ray detection module 10, the support substrate 12, the circuit board 11, the FPC 2e1, and the like are housed inside a space surrounded by the housing 51 and the incident window 52.

Since the X-ray detection module 10 is constructed by stacking thin members, the module is lightweight and has a low mechanical strength. For this reason, the X-ray detection panel PNL (X-ray detection module 10) is fixed to one flat surface of the support substrate 12 via an adhesive sheet. The support substrate 12 is formed of, for example, an aluminum alloy, in a plate shape, and has a strength necessary to stably hold the X-ray detection panel PNL. It is thereby possible to suppress damage to the X-ray detection panel PNL when vibration or shock is applied to the X-ray detector 1 from the outside.

The circuit board 11 is fixed to the other surface of the support substrate 12 via the spacers 9a and 9b. A distance of electric insulation from the support substrate 12, which is mainly formed of metal, to the circuit board 11, can be maintained by using the spacers 9a and 9b.

The circuit board 11 is fixed to the inner surface of the housing 51 via the spacers 9c and 9d. A distance of electric insulation from the housing 51, which is mainly formed of metal, to the circuit board 11, can be maintained by using the spacers 9c and 9d. The housing 51 supports the support substrate 12 and the like via the circuit board 11 and the spacers 9a, 9b, 9c, and 9d.

A connector corresponding to the FPC 2e1 is mounted on the circuit board 11, and the FPC 2e1 is electrically connected to the circuit board 11 via the connector. A thermocompression bonding method using an anisotropic conductive film (ACF) is used to connect the FPC 2e1 with the X-ray detection panel PNL. This method ensures electrical connection between a plurality of fine pads of the X-ray detection panel PNL and a plurality of fine pads of the FPC 2e1. Incidentally, the pads of the X-ray detection panel PNL will be described later.

As described above, the circuit board 11 is electrically connected to the X-ray detection panel PNL via the connector, the FPC 2e1, and the like. The circuit board 11 electrically drives the X-ray detection panel PNL and electrically processes output signals from the X-ray detection panel PNL.

FIG. 2 is a perspective view showing the support substrate 12, the X-ray detection panel PNL, the circuit board 11, and the plurality of FPC 2e1 and 2e2 of the X-ray detector 1 of the first comparative example, and also shows an image transmission unit 4. FIG. 2 does not show all the members of the X-ray detector 1. Illustration of several members of the X-ray detector 1, such as a sealant to be described later, is omitted in FIG. 2.

As shown in FIG. 2, the X-ray detection panel PNL comprises a photo-electric conversion substrate 2, a scintillator layer 5, and the like. The photo-electric conversion substrate 2 includes a substrate 2a, a photo-electric conversion section 2b, a plurality of control lines (or gate lines) 2c1, a plurality of data lines (or signal lines) 2c2, and the like. The number, arrangement, and the like of the photo-electric conversion section 2b, the control lines 2c1, and the data lines 2c2 are not limited to the example in FIG. 2.

The plurality of control lines 2c1 extend in the row direction X and are arranged at predetermined intervals in the column direction Y. The plurality of data lines 2c2 extend in the column direction Y, intersect the plurality of control lines 2c1, and are arranged at predetermined intervals in the row direction X.

The plurality of photo-electric conversion sections 2b are provided on one main surface side of the substrate 2a. The photo-electric conversion sections 2b are provided in quadrangular areas partitioned by the control lines 2c1 and the data lines 2c2. One photo-electric conversion section 2b corresponds to one pixel of an X-ray image. The plurality of photo-electric conversion sections 2b are arrayed in a matrix. Based on the above, the photo-electric conversion section 2b is an array substrate.

Each of the photo-electric conversion sections 2b includes a photo-electric conversion element 2b1 and a thin film transistor (TFT) 2b2 serving as a switching element. The TFT 2b2 is connected to one corresponding control line 2c1 and one corresponding data line 2c2. The photo-electric conversion element 2b1 is electrically connected to the TFT 2b2.

The control line 2c1 is electrically connected to the circuit board 11 via the FPC 2e1. The circuit board 11 supplies a control signal S1 to the plurality of control lines 2c1 via the FPC 2e1. The data line 2c2 is electrically connected to the circuit board 11 via the FPC 2e2. An image data signal S2 converted by the photo-electric conversion element 2b1 (i.e., an electric charge accumulated in the photo-electric conversion section 2b) is transmitted to the circuit board 11 via the TFT 2b2, the data line 2c2, and the FPC 2e2.

The X-ray detector 1 further comprises an image transmission unit 4. The image transmission unit 4 is connected to circuit board 11 via a wiring line 4a. Incidentally, the image transmission unit 4 may be incorporated into the circuit board 11. The image transmission unit 4 generates an X-ray image, based on image data signals converted into digital signals by a plurality of analog-to-digital converters (not shown). The generated X-ray image data is output from the image transmission unit 4 to an external device.

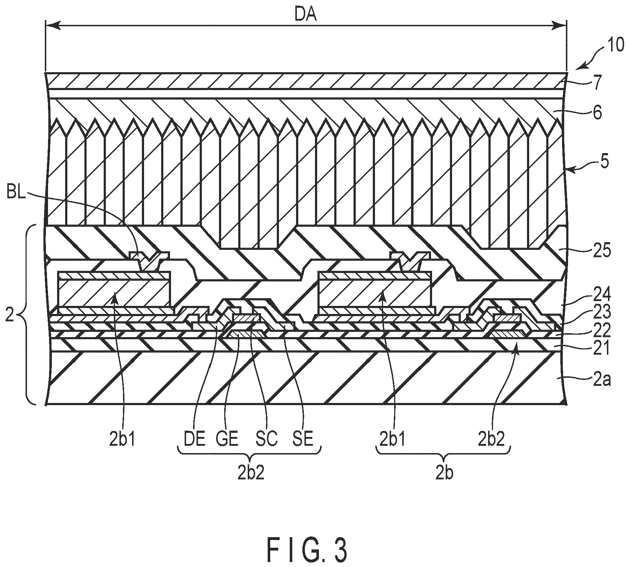

FIG. 3 is an enlarged sectional view showing a part of the X-ray detection module 10 of the X-ray detector 1 according to the first comparative example.

As shown in FIG. 3, the photo-electric conversion substrate 2 includes the substrate 2a, the plurality of photo-electric conversion sections 2b, and insulating layers 21, 22, 23, 24, and 25. The plurality of photo-electric conversion sections 2b are located in the detection area DA. Each of the photo-electric conversion sections 2b comprises a photo-electric conversion element 2b1 and a TFT 2b2.

The TFT 2b2 includes a gate electrode GE, a semiconductor layer SC, a source electrode SE, and a drain electrode DE. The photo-electric conversion element 2b1 is composed of a photodiode. Incidentally, the photo-electric conversion element 2b1 may be configured by a Charge Coupled Device (CCD) or the like, and may be configured to convert light into electric charge.

The substrate 2a has a plate-like shape and is formed of an insulating material. Examples of the insulating material include glass such as alkali-free glass. The planar shape of the substrate 2a is, for example, a quadrangle. The thickness of the substrate 2a is, for example, 0.7 mm. The insulating layer 21 is provided on the substrate 2a.

The gate electrode GE is formed on the insulating layer 21. The gate electrode GE is electrically connected to the control line 2c1. The insulating layer 22 is provided on the insulating layer 21 and the gate electrode GE. The semiconductor layer SC is provided on the insulating layer 22 and faces the gate electrode GE. The semiconductor layer SC is formed of a semiconductor material such as amorphous silicon as an amorphous semiconductor and polycrystalline silicon as a polycrystalline semiconductor.

The source electrode SE and the drain electrode DE are provided on the insulating layer 22 and the semiconductor layer SC. The gate electrode GE, the source electrode SE, the drain electrode DE, the control line 2c1, and the data line 2c2 are formed using a low-resistance metal such as aluminum or chromium.

The source electrode SE is electrically connected to a source area of the semiconductor layer SC. In addition, the source electrode SE is electrically connected to the data line 2c2. The drain electrode DE is electrically connected to a drain area of the semiconductor layer SC.

The insulating layer 23 is provided on the insulating layer 22, the semiconductor layer SC, the source electrode SE, and the drain electrode DE. The photo-electric conversion element 2b1 is electrically connected to the drain electrode DE. The insulating layer 24 is provided on the insulating layer 23 and the photo-electric conversion element 2b1. A bias line BL is provided on the insulating layer 24, and is connected to the photo-electric conversion element 2b1 through a contact hole formed in the insulating layer 24. The insulating layer 25 is provided on the insulating layer 24 and the bias line BL.

The insulating layers 21, 22, 23, 24, and 25 are formed of an insulating material such as an inorganic insulating material or an organic insulating material. Examples of the inorganic insulating material include oxide insulating materials, nitride insulating materials, and oxynitride insulating materials. Examples of the organic insulating material include resins.

The scintillator layer 5 is provided on the photo-electric conversion substrate 2 (i.e., a plurality of photo-electric conversion sections 2b). The scintillator layer 5 is located at least in the detection area DA and covers the plurality of photo-electric conversion sections 2b. The scintillator layer 5 is configured to convert incident X-rays into light (visible light or fluorescence). The amount of light (light amount) generated in the scintillator layer 5 is proportional to the intensity of incident X-rays.

Incidentally, that the photo-electric conversion element 2b1 converts the light made incident from the scintillator layer 5 into electric charge. The converted charge is accumulated in the photo-electric conversion element 2b1. The TFT 2b2 can switch between charging the photo-electric conversion element 2b1 and discharging from the photo-electric conversion element 2b1. Incidentally, when the self-capacitance of the photo-electric conversion element 2b1 is insufficient, the photo-electric conversion substrate 2 may further include a capacitor (storage capacitor) and store the electric charge converted by the photo-electric conversion element 2b1 in the capacitor.

The scintillator layer 5 is formed of an oxide material such as terbium-activated gadolinium oxysulfide (Gd₂O₂S:Tb) or a chloride material such as thallium-activated cesium iodide (CsI:Tl). In the present comparative example, the scintillator layer 5 is formed of CsI:Tl. If the scintillator layer 5 of CsI:Tl is formed using a vacuum evaporation method, the scintillator layer 5 formed of an aggregate of a plurality of columnar crystals can be obtained. Light generated in the scintillator layer 5 propagates to each of a photo-electric conversion substrate 2 side and a light reflective layer 6 side along the columnar crystals.

By confining the visible light generated inside the scintillator layer 5 formed of CsI:Tl, inside the columnar crystals, light scattering is suppressed, and a high-resolution image can be obtained. The thickness of the scintillator layer 5 is approximately 200 to 1000 µm. On the outermost surface of the scintillator layer 5, the columnar crystals of the scintillator layer 5 have a thickness of 3 to 12 µm.

Incidentally, when the scintillator layer 5 is formed using the vacuum evaporation method, a mask having an opening is used.

Alternatively, the scintillator layer 5 may include a plurality of scintillator portions arranged in a matrix, provided one-to-one on the photo-electric conversion section 2b, and each having a quadrangular prism shape. When such a scintillator layer 5 is formed, a scintillator material obtained by mixing gadolinium oxysulfide phosphor particles with a binder material is applied onto the photo-electric conversion substrate 2, and the scintillator material is fired and hardened. After that, dicing is performed using a dicer to form grooves in a grating shape in the scintillator material. In the above case, air or an inert gas such as nitrogen (N₂) for preventing oxidation is sealed between the plurality of scintillator portions. Alternatively, the space between the plurality of scintillator portions may be set to a space whose pressure is lower than atmospheric pressure.

The X-ray detection panel PNL further comprises the light reflective layer 6. The light reflective layer 6 is provided on the X-ray incident side of the scintillator layer 5. The light reflective layer 6 is located in at least the detection area DA and covers the upper surface of the scintillator layer 5. The light reflective layer 6 is provided to increase the efficiency of use of light (fluorescence) and improve the sensitivity characteristics. In other words, the light reflective layer 6 reflects the light that travels towards a side opposite to the side where the photo-electric conversion section 2b is provided, of the light generated in the scintillator layer 5, such that the light travels toward the photo-electric conversion section 2b.

For example, the light reflective layer 6 can be formed by applying a coating material obtained by mixing a white pigment, a resin, and a solvent onto the scintillator layer 5, and then drying the coating material.

By using the scintillator layer 5 formed of CsI:Tl, the X-ray detector 1 can obtain an X-ray image with high resolution. However, the scintillator layer 5 is characterized by being easily deteriorated by moisture and having high hygroscopicity. For this reason, when the scintillator layer 5 is in contact with the atmosphere, the scintillator layer 5 absorbs moisture from the atmosphere, resulting in deterioration of the characteristics of the scintillator layer 5.

When the scintillator layer 5 formed of CsI:Tl absorbs moisture, the efficiency of converting X-rays into light decreases, resulting in a decrease in the luminance of the light generated in the scintillator layer 5. In addition, when the scintillator layer 5 absorbs moisture, the columnar crystals of the scintillator layer 5 collapse and the light confinement effect of the columnar crystals is deteriorated. As a result, the resolution may be lowered and the quality of the X-ray image may be lowered, in the X-ray detector 1.

Therefore, the X-ray detection panel PNL comprises a moisture-proof cover 7. The moisture-proof cover (moisture-proof film) 7 serving as a film-like cover is provided above the scintillator layer 5 and the light reflective layer 6 to cover the scintillator layer 5 and the light reflective layer 6. The moisture-proof cover 7 is provided to suppress the deterioration of the characteristics of the scintillator layer 5, which is caused by the moisture contained in the atmosphere. The moisture-proof cover 7 completely covers an exposed portion of the scintillator layer 5.

The moisture-proof cover 7 is formed of a sheet containing metal. Examples of the metal include metals containing aluminum, metals containing copper, metals containing magnesium, metals containing tungsten, stainless steel, Kovar, and the like. When the moisture-proof cover 7 contains metal, the moisture-proof cover 7 can prevent or significantly suppress the permeation of moisture.

In addition, the moisture-proof cover 7 may be formed of a stacked sheet in which a resin layer and a metal layer are stacked. In this case, the resin layer can be formed of a material such as polyimide resin, epoxy resin, polyethylene terephthalate resin, Teflon (registered trademark), low density polyethylene, high density polyethylene, or elastic rubber. The metal layer can include, for example, the above-described metals. The metal layer can be formed using a sputtering method, a lamination method, or the like.

In this case, it is preferable to provide the metal layer closer closer to the scintillator layer 5 side than the resin layer. Since the metal layer can be covered with the resin layer, damage which the metal layer may suffer due to an external force or the like can be suppressed. In addition, if the metal layer is provided closer to the scintillator layer 5 than the resin layer, deterioration of the characteristics of the scintillator layer 5, which is caused by moisture permeation through the resin layer, can be suppressed.

Examples of the moisture-proof cover 7 include a sheet including a metal layer, a sheet including an inorganic insulating layer, a laminated sheet in which a resin layer and a metal layer are laminated, and a laminated sheet in which a resin layer and an inorganic insulating layer are laminated. Based on the above, the inorganic layer of the moisture-proof cover 7 is not limited to a metal layer, but may be an inorganic insulating layer. Alternatively, the moisture-proof cover 7 may include both a metal layer and an inorganic insulating layer. The inorganic insulating layer can be formed of a layer containing silicon oxide, aluminum oxide, or the like. The inorganic insulating layer can be formed using a sputtering method or the like. In the present comparative example, the moisture-proof cover 7 is formed of thin aluminum foil.

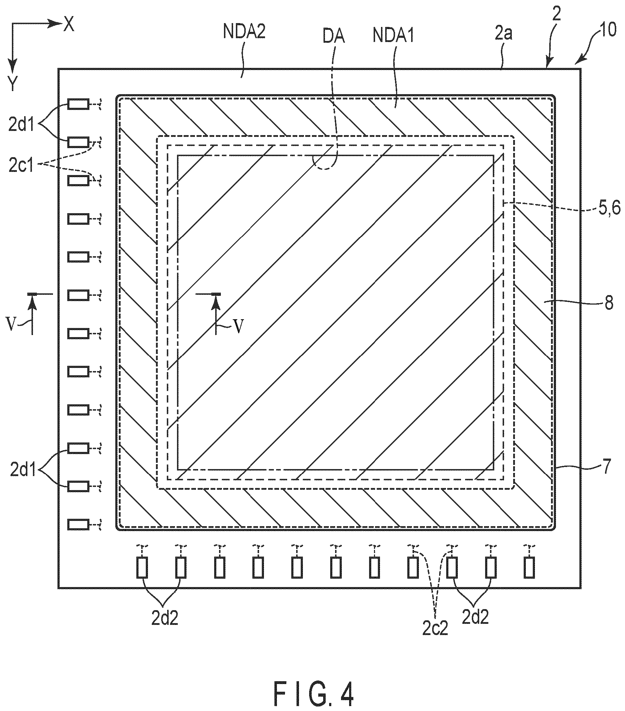

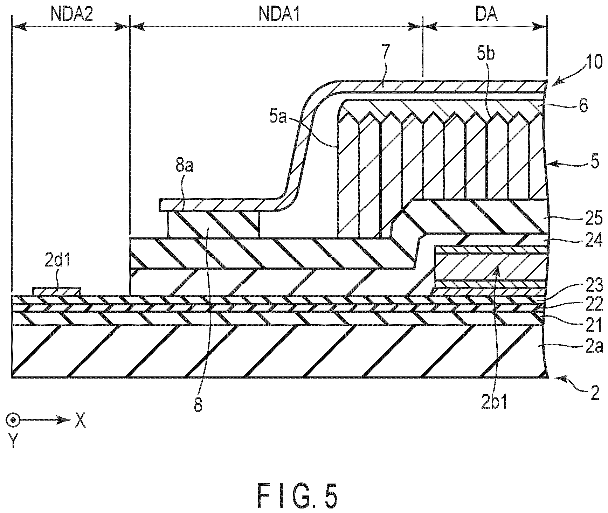

FIG. 4 is a plan view showing the X-ray detection module 10. In FIG. 4, the scintillator layer 5 is marked with diagonal lines rising upward to the right, and the sealant 8 is marked with diagonal lines falling downward to the right. FIG. 5 is a cross-sectional view showing a part of the X-ray detection module 10 of FIG. 4 along line V-V.

As shown in FIG. 4 and FIG. 5, the photo-electric conversion substrate 2 has a detection area DA and a non-detection area outside the detection area DA. The detection area DA is a quadrangular area. The non-detection area of the photo-electric conversion substrate 2 includes a frame-shaped first non-detection area NDA1 located around the detection area DA, and a second non-detection area NDA2 outside the first non-detection area NDA1. In the present comparative example, the second non-detection area NDA2 has a frame shape.

The scintillator layer 5 is located in at least the detection area DA. The scintillator layer 5 has a side surface 5a and an upper surface 5b. The side surface 5a is located in the first non-detection area NDA1. The light reflective layer 6 is located in the detection area DA and the first non-detection area NDA1, and is formed on the upper surface 5b of the scintillator layer 5. In the first comparative example, the light reflective layer 6 has the same size as the scintillator layer 5 and completely overlaps with the scintillator layer 5, in plan view. The light reflective layer 6 is not present on the side surface 5a side of the scintillator layer 5.

The photo-electric conversion substrate 2 further includes a plurality of pads 2d1 and a plurality of pads 2d2. The pads 2d1 and the pads 2d2 are located in the second non-detection area NDA2. In the first comparative example, the plurality of pads 2d1 are arranged along the left side of the substrate 2a, and the plurality of pads 2d2 are arranged along the lower side of the substrate 2a. For example, the pads 2d1 and 2d2 are provided on the insulating layer 23 and are not covered with the insulating layer 24 and the insulating layer 25.

Incidentally, FIG. 4 schematically shows a plurality of pads, and the number, shape, size, position, and pitch of the plurality of pads are not limited to those in the example shown in FIG. 4.

One control line 2c1 extends through the detection area DA, the first non-detection area NDA1, and the second non-detection area NDA2, and is electrically connected to one of the plurality of pads 2d1. One data line 2c2 extends through the detection area DA, the first non-detection area NDA1, and the second non-detection area NDA2, and is electrically connected to one of the plurality of pads 2d2.

One of a plurality of wiring lines provided on the FPC 2e1 is electrically connected to one pad 2d1, and one of a plurality of wiring lines provided on the FPC 2e2 is electrically connected to one pad 2d2 (FIG. 2).

The X-ray detection module 10 further comprises a sealant 8. The sealant 8 is located in the first non-detection area NDA1 and surrounds the scintillator layer 5. The sealant 8 has a frame-like shape and extends continuously around the scintillator layer 5. The sealant 8 is adhered to the photo-electric conversion substrate 2 (for example, the above-mentioned insulating layer 25).

The moisture-proof cover 7 is located in the detection area DA and the first non-detection area NDA1. The moisture-proof cover 7 completely covers the scintillator layer 5 in the plan view shown in FIG. 4. As shown in FIG. 5, the portion of the scintillator layer 5, which is not covered with the photo-electric conversion substrate 2 and the sealant 8, is completely covered with the moisture-proof cover 7. In other words, the moisture-proof cover 7 covers the scintillator layer 5 together with the photo-electric conversion substrate 2 and the sealant 8.

The moisture-proof cover 7 is adhered to an outer surface 8a of the sealant 8. The moisture-proof cover 7 covers at least a part of the sealant 8. When the moisture-proof cover 7 is adhered to the sealant 8, the sealant 8 is heated from the outside near a peripheral edge of the moisture-proof cover 7 to melt the sealant 8, and the resin of the melted sealant 8 is brought into close contact with the surface of the moisture-proof cover 7. After that, the vicinity of the peripheral edge of the moisture-proof cover 7 and the sealant 8 are bonded together by cooling the sealant 8.

In this case, when the temperature near the peripheral edge of the moisture-proof cover 7 and the temperature of the sealant 8 decrease, a thermal stress is generated between the vicinity of the peripheral edge of the moisture-proof cover 7 and the sealant 8. If a thermal stress is generated between the vicinity of the peripheral edge of the moisture-proof cover 7 and the sealant 8, there is a possibility that peeling may occur between the vicinity of the peripheral edge of the moisture-proof cover 7 and the sealant 8. If peeling occurs, the moisture-proof performance may be significantly reduced.

Since the moisture-proof cover 7 of the first comparative example is formed of thin aluminum foil, the moisture-proof cover 7 can easily stretch when a thermal stress occurs. Therefore, a thermal stress can be alleviated and peeling of the vicinity of the peripheral edge of the moisture-proof cover 7 from the sealant 8 can be suppressed.

The sealant 8 is formed of a material containing thermoplastic resin. The sealant 8 is formed of a material containing thermoplastic resin as its main component. The sealant 8 may be formed of 100% thermoplastic resin. Alternatively, the sealant 8 may be formed of a material formed by mixing a thermoplastic resin with an additive. If the sealant 8 contains thermoplastic resin as a main component, the sealant 8 can join the photo-electric conversion substrate 2 and the moisture-proof cover 7 by heating.

As the thermoplastic resin, nylon, polyethyleneterephthalate (PET), polyurethane, polyester, polyvinyl chloride, acrylonitrile butadiene styrene (ABS), acrylic, polystyrene, polyethylene, polypropylene, and the like can be used. In this case, the water vapor transmission rate of polyethylene is 0.068 g·mm/day·m², and the water vapor transmission rate of polypropylene is 0.04 g·mm/day·m². These water vapor transmission rates are low. Therefore, if the sealant 8 contains at least one of polyethylene and polypropylene as its main component, the amount of moisture that passes through the sealant 8 and reaches the scintillator layer 5 can be significantly reduced.

Incidentally, the sealant 8 may be formed of an ultraviolet curing adhesive instead of a thermoplastic resin.

The moisture-proof cover 7 hermetically closes the scintillator layer 5 together with the photo-electric conversion substrate 2 and the sealant 8. Therefore, the scintillator layer 5 can be protected from the moisture contained in the atmosphere outside the X-ray detection panel PNL, and the deterioration in image quality of the X-ray detector 1 can be suppressed. Furthermore, the moisture-proof cover 7 is formed of aluminum foil, which is a metal foil. Therefore, the amount of moisture passing through the moisture-proof cover 7 can be further reduced.

The X-ray detector 1 of the first comparative example is configured as described above.

According to the X-ray detector 1 of the first comparative example configured as described above, moisture reaching the scintillator layer 5 can be suppressed by attaching the moisture-proof cover 7 to the photo-electric conversion substrate 2 by the sealant 8. However, when the light reflective layer 6 is formed directly on the scintillator layer 5, problems are likely to occur in the X-ray detector 1 due to manufacturing troubles. For example, problems may occur for the reason that it becomes difficult to control the area where the light reflective layer 6 is formed. In addition, problems may occur for the reason that a foreign matter is mixed into the light reflective layer 6.

Next, the X-ray detector 1 in a case that the area where the light reflective layer 6 is formed cannot be controlled and a foreign matter is mixed into the light reflective layer 6 will be described in a second comparative example.

### (Second comparative example)

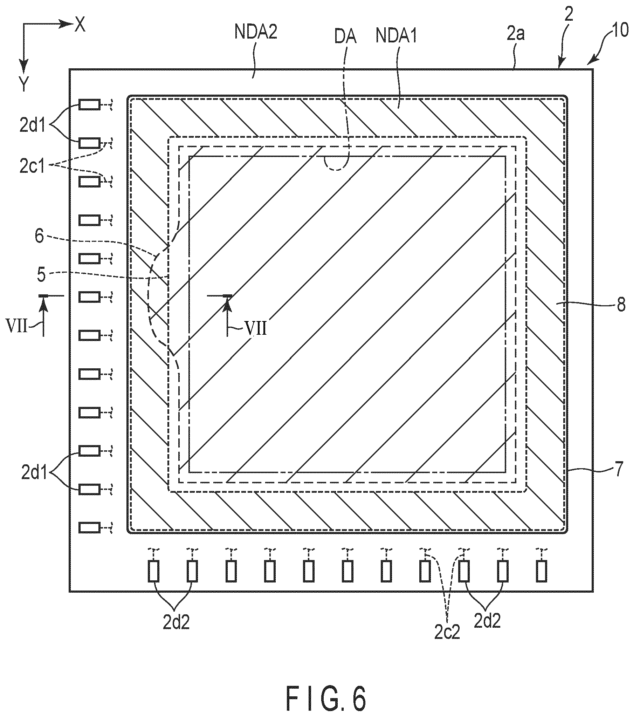

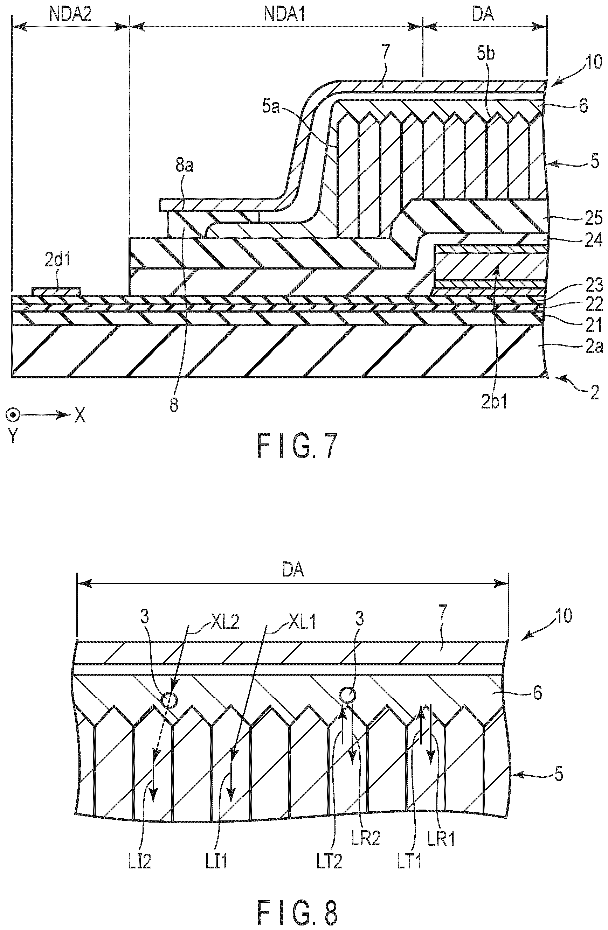

Next, a second comparative example will be described. FIG. 6 is a plan view showing the X-ray detection module 10 of the X-ray detector 1 according to the second comparative example. In FIG. 6, the light reflective layer 6 is marked with diagonal lines rising upward to the right, and the sealant 8 is marked with diagonal lines falling downward to the right. FIG. 7 is a cross-sectional view showing a part of the X-ray detection module 10 of FIG. 6 along line VII-VII.

As shown in FIG. 6 and FIG. 7, the X-ray detector 1 of the second comparative example comprises the photo-electric conversion substrate 2, the scintillator layer 5, the light reflective layer 6, the sealant 8, the moisture-proof cover 7, and the like, similarly to the above-described first comparative example. In this second comparative example, the raw material for forming the light reflective layer 6 is spilled in the area outside the scintillator layer 5 (the area where the sealant 8 is formed) in the first non-detection area NDA1, due to a manufacturing problem, and a light reflective layer 6 is also formed on the photo-electric conversion substrate 2.

The light reflective layer 6 is interposed between the sealant 8 and the photo-electric conversion substrate 2, and the sealant 8 is also formed on the light reflective layer 6. Since the adhesive strength of the sealant 8 to the photo-electric conversion substrate 2 (insulating layer 25) is reduced as compared to the first comparative example, the bonding between the moisture-proof cover 7 and the photo-electric conversion substrate 2 may be adversely affected. For example, the sealant 8 becomes easily peeled off from the photo-electric conversion substrate 2. If the sealant 8 is peeled off from the photo-electric conversion substrate 2, outside air may enter the space surrounded by the photo-electric conversion substrate 2, moisture-proof cover 7, and the like and the characteristics of the scintillator layer 5 may be deteriorated due to the moisture contained in the outside air. As a result, the X-ray detector 1 becomes defective as a product.

In addition, in order to avoid the above problems, removing the portion of the light reflective layer 6, which is undesirably formed in the area where the sealant 8 is be formed, from the photo-electric conversion substrate 2 is considered. However, when the light reflective layer 6 is removed, there is a risk of damaging the photo-electric conversion substrate 2, the scintillator layer 5, and the like, and it is difficult to remove the light reflective layer 6 from the photo-electric conversion substrate 2. Based on the above, if the area where the light reflective layer 6 is formed cannot be controlled, reuse of the expensive photo-electric conversion substrate 2 is difficult.

FIG. 8 is an enlarged sectional view showing a part of the X-ray detection module 10 according to the second comparative example, and is a view showing the scintillator layer 5, the light reflective layer 6, and the moisture-proof cover 7.

As shown in FIG. 8, in the second comparative example, foreign matters 3 have been mixed into the raw material of the light reflective layer 6 during manufacturing, and the foreign matters 3 remain in the light reflective layer 6 after drying, due to a manufacturing problem. The foreign matters 3 are air bubbles, resin, metal, and the like.

The foreign matters 3 in the light reflective layer 6 may adversely affect the transmittance of X-rays. For example, if the intensity of X-ray XL1 and the intensity of X-ray XL2 are set the same just before made incident on the light reflective layer 6, the transmittance of the X-ray XL2 made incident on the scintillator layer 5 through the foreign matter 3 changes with respect to the transmittance of the X-ray XL1 that does not pass through the foreign matter 3 and is made incident on the scintillator layer 5. For this reason, the amount (luminance) of light LI2 generated in the scintillator layer 5 when the X-ray XL2 passes through the foreign matter 3 and is made incident on the scintillator layer 5 changes with respect to the amount (luminance) of light LI1 generated in the scintillator layer 5 when the X-ray XL1 does not pass through the foreign matter 3 and is made incident on the scintillator layer 5. Since the amount of X-rays converted into light (fluorescence) becomes non-uniform in the scintillator layer 5, an abnormality occurs in the X-ray image, and the X-ray detector 1 becomes defective as a product.

Furthermore, the foreign matters 3 in the light reflective layer 6 may adversely affect the light reflectance. The light reflectance in the area of the light reflective layer 6 where the foreign matter 3 is present changes with respect to the light reflectance in the area of the light reflective layer 6 where the foreign matter 3 is not present. For example, when the amount (luminance) of light LT1 and the amount (luminance) of light LT2 generated in the scintillator layer 5 are set the same, the amount (luminance) of light LR2 reflected in the area of the light reflective layer 6 where the foreign matter 3 is present changes with respect to the amount (luminance) of the light LR1 reflected in the area of the light reflective layer 6 where the foreign matter 3 is not present. Since the amount of reflected light (fluorescence) becomes non-uniform in the light reflective layer 6, an abnormality occurs in the X-ray image, and the X-ray detector 1 becomes defective as a product.

Controlling the area where the light reflective layer 6 is formed is difficult, and avoiding a situation that the light reflective layer 6 is undesirably formed on the photo-electric conversion substrate 2 is difficult, unlike the X-ray detector 1 of the second comparative example configured as described above. In addition, it is difficult to prevent foreign matters from entering the light reflective layer 6.

As described above, in the X-ray detection panel PNL, the photo-electric conversion substrate 2 is very expensive, but reusing the photo-electric conversion substrate 2 (X-ray detection panel PNL) on which the defective light reflective layer 6 is formed becomes difficult. If a defect occurs in the light reflective layer 6, the photo-electric conversion substrate 2 may be discarded. Since the manufacturing yield becomes low, the final product costs may increase.

Next, an embodiment of an X-ray detector 1 capable of solving the problems of the second comparative example will be described. In the embodiment, it is possible to avoid a situation that good photo-electric conversion substrates 2 are discarded, to suppress an increase in product costs, and to obtain an inexpensive X-ray detector 1. In addition, in the embodiment, the X-ray detector 1 can utilize the light reflective layer 6 that has uniform light reflection characteristics and uniform light transmittance. Furthermore, in the embodiment, the X-ray detector 1 is capable of suppressing moisture reaching the scintillator layer 5.

### (Embodiment)

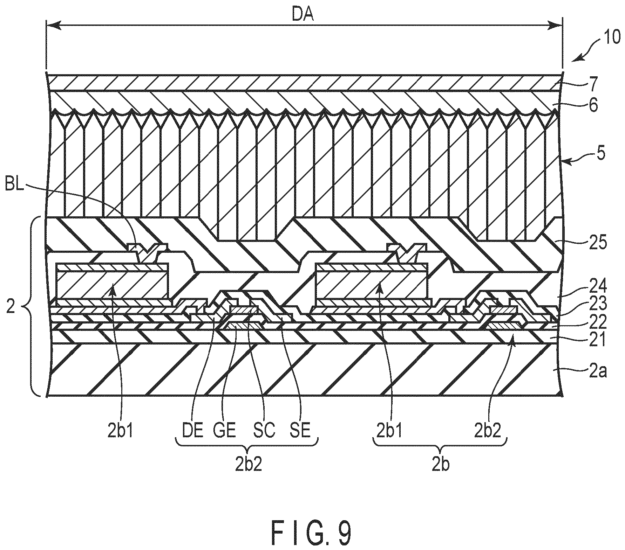

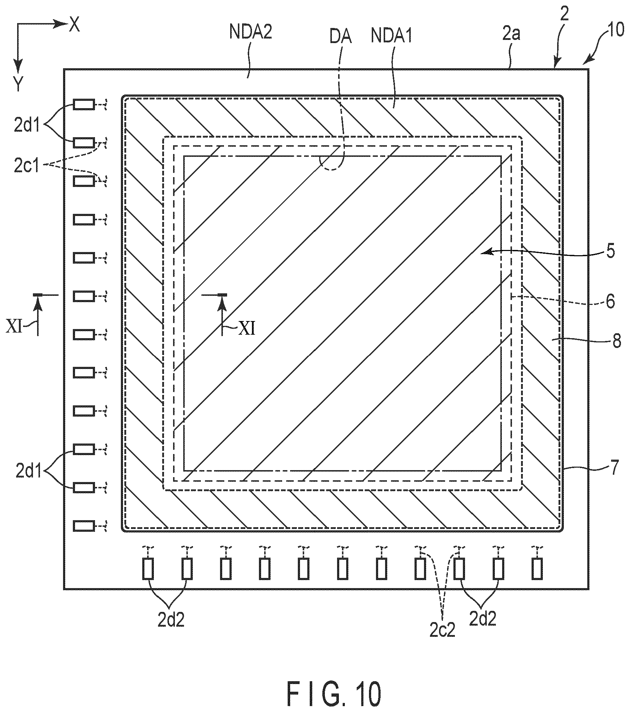

Next, an embodiment will be described. The X-ray detector 1 has the same configuration as the above-described first comparative example except for constituent elements described in the embodiment. FIG. 9 is an enlarged sectional view showing a part of the X-ray detection module 10 of the X-ray detector 1 according to the embodiment. FIG. 10 is a plan view showing the X-ray detection module 10 according to the embodiment. In FIG. 10, the light reflective layer 6 is marked with diagonal lines rising upward to the right, and the sealant 8 is marked with diagonal lines falling downward to the right.

As shown in FIG. 9 and FIG. 10, the embodiment is different from the first comparative example in that the light reflective layer 6 is formed on the moisture-proof cover 7. The light reflective layer 6 is provided between the scintillator layer 5 and the moisture-proof cover 7, is fixed to the moisture-proof cover 7, and is located in at least the detection area DA. In the embodiment, the light reflective layer 6 is located in the detection area DA and the first non-detection area NDA1. The X-ray detection module 10 has a laminated layer structure of the moisture-proof cover 7 and the light reflective layer 6.

When the light reflective layer 6 is formed, a coating material formed by mixing a white pigment, a transparent resin binder, and a solvent is applied to the surface of the moisture-proof cover 7 on the scintillator layer 5 side. Brush coating, inkjet, roller coating, screen printing, and the like can be used to apply the above-mentioned coating material. After applying the coating material, the light reflective layer 6 can be formed by drying the coating material.

The above-mentioned white pigment includes a plurality of light scattering particles. In order to suppress the amount of light absorption, the plurality of light scattering particles are desirably formed of a metal oxide. In the embodiment, the plurality of light scattering particles are formed of titanium oxide (TiO₂) as a metal oxide. The light reflective layer 6 contains light scattering particles formed of titanium oxide and having a high refractive index. The reflectance of light in the light reflective layer 6 can be increased, and the amount of light (fluorescence) reaching the photo-electric conversion substrate 2 can be increased. Since the light reflective layer 6 can improve the efficiency of use of light (fluorescence) and improve the sensitivity characteristics, the performance of the X-ray detection panel PNL can be improved. Incidentally, the above-mentioned metal oxide is not limited to titanium oxide, but may be zinc oxide (ZnO), silicon dioxide (SiO₂), or the like.

The light reflective layer 6 is formed on the moisture-proof cover 7. Even if a foreign matter (3) is mixed into the light reflective layer 6, the relatively inexpensive laminated layer body of the moisture-proof cover 7 and the light reflective layer 6 may be discarded instead of discarding the expensive photo-electric conversion substrate 2. Therefore, an increase in final product costs can be suppressed.

The moisture-proof cover 7 is formed of aluminum foil as a metal foil. By using metal foil for the moisture-proof cover 7, the moisture permeating through the moisture-proof cover 7 can be further reduced. Since performance deterioration of the scintillator layer 5 caused by moisture can be suppressed, the product life of the X-ray detection panel PNL can be extended.

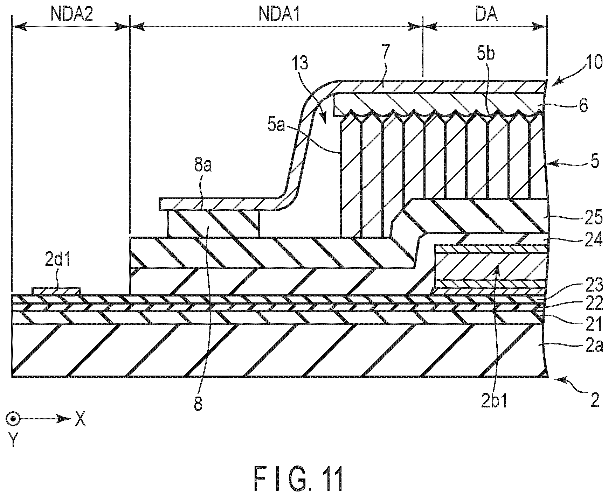

FIG. 11 is a cross-sectional view showing a part of the X-ray detection module 10 of FIG. 10 along line XI-XI.

As shown in FIG. 11, the light reflective layer 6 does not overlap with the peripheral edge of the moisture-proof cover 7, and the peripheral edge of the moisture-proof cover 7 is directly adhered to the sealant 8 to cover the scintillator layer 5 together with the photo-electric conversion substrate 2 and the sealant 8.

The moisture-proof cover 7 forms a space 13 in which the scintillator layer 5 is sealed, together with the photo-electric conversion substrate 2 and the sealant 8. In the embodiment, the space 13 is a space in which a pressure is reduced from atmospheric pressure. For example, the light reflective layer 6 can be brought into contact with the scintillator layer 5 if the moisture-proof cover 7 and the sealant 8 are joined in an environment in which a pressure is lower than atmospheric pressure. Incidentally, the surface of the light reflective layer 6 on the scintillator layer 5 side is a flat surface, in a state in which the light reflective layer 6 is not in contact with the scintillator layer 5. In the embodiment, the light reflective layer 6 is located in the depressurized space 13, is pushed toward the scintillator layer 5 by atmospheric pressure, is elastically deformed, and has a shape that follows the unevenness of the upper surface 5b of the scintillator layer 5.

In addition, in general, the scintillator layer 5 includes voids of approximately 10 to 40% of its volume. For this reason, if gas is contained in the voids, the gas may expand and damage the moisture-proof cover 7 if the X-ray detector 1 is transported by aircraft or if the X-ray detector 1 is used at high altitudes. If the moisture-proof cover 7 and the sealant 8 are joined in an environment in which a pressure is lower than atmospheric pressure, damage to the moisture-proof cover 7 can be suppressed even if the X-ray detector 1 is transported by aircraft or the like. Based on the above, the pressure in the space 13 defined by the photo-electric conversion substrate 2, the sealant 8, and the moisture-proof cover 7 is desirably lower than atmospheric pressure.

According to the X-ray detector 1 of the embodiment configured as described above, the X-ray detector 1 comprises the photo-electric conversion substrate 2, the scintillator layer 5, the frame-shaped sealant 8, the moisture-proof cover 7, and the light reflective layer 6. The light reflective layer 6 is provided between the scintillator layer 5 and the moisture-proof cover 7, is fixed to the moisture-proof cover 7, and is located in at least the detection area DA. Since the scintillator layer 5 has deliquescent properties, it is necessary to avoid a situation in which the scintillator layer 5 may absorb moisture and become liquefied. If the scintillator layer 5 is deteriorated, it becomes difficult to convert X-rays (radiation) into light (fluorescence).

Therefore, the moisture-proof cover 7 is directly adhered to the sealant 8 and covers the scintillator layer 5 together with the photo-electric conversion substrate 2 and the sealant 8. Since the light reflective layer 6 is not formed directly on the scintillator layer 5, a situation in which the light reflective layer 6 is interposed between the photo-electric conversion substrate 2 and the sealant 8 can be avoided. In addition, the light reflective layer 6 is formed on the moisture-proof cover 7 such that the light-reflective layer 6 is not interposed between the moisture-proof cover 7 and the sealant 8. The sealant 8 is desirably adhered to the photo-electric conversion substrate 2, and the moisture-proof cover 7 is desirably adhered to the sealant 8. Therefore, the moisture-proof cover 7 and the sealant 8 can suppress moisture reaching the scintillator layer 5 together with the photo-electric conversion substrate 2.

Moreover, by making the space 13 become a depressurized space, it is possible to remove from the space 13 even a small amount of moisture that may be mixed into the space 13 during manufacturing. Deterioration of the scintillator layer 5, which is caused by moisture, can be further suppressed, and the deterioration in image quality in the X-ray detector 1 can be suppressed.

Furthermore, if voids are formed between the light reflective layer 6 and the scintillator layer 5 and if light generated inside the scintillator layer 5 is reflected by the light reflective layer 6, the light tends to easily propagate laterally. If light propagates laterally, the resolution of the X-ray image is deteriorated. For this reason, the light reflective layer 6 is desirably in contact with the scintillator layer 5, similarly to the embodiment. By bringing the light reflective layer 6 into contact with the scintillator layer 5, lateral propagation of light can be suppressed, and the X-ray detector 1 can obtain a high-resolution image. As described above, by making the space 13 become a depressurized space, pressure caused by atmospheric pressure is applied to the light reflective layer 6, and the moisture-proof cover 7 can promote contact between the light reflective layer 6 and the scintillator layer 5. Therefore, the resolution of the image obtained by the X-ray detector 1 can easily be improved.

As described above, according to the embodiment, a high-performance X-ray detector 1 capable of suppressing the increase in final product costs can be obtained.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiment described herein may be made without departing from the spirit of the invention. The accompanying claims and their equivalents are intended to cover such forms or modifications as would fall within the scope and spirit of the inventions.

For example, the technique described above in the embodiment is not limited to application to the X-ray detector 1, but can be applied to other X-ray detectors and various types of radiation detectors. The radiation detector may comprise a radiation detection panel that detects radiation instead of the X-ray detection panel PNL.

## Claims

1. A radiation detector comprising:
a photo-electric conversion substrate including a detection area and a non-detection area outside the detection area;
a scintillator layer provided on the photo-electric conversion substrate and located in at least the detection area;
a frame-shaped sealant located in the non-detection area, surrounding the scintillator layer, and adhered to the photo-electric conversion substrate;
a moisture-proof cover provided above the scintillator layer and located in the detection area and the non-detection area; and
a light reflective layer provided between the scintillator layer and the moisture-proof cover, fixed to the moisture-proof cover, and located in at least the detection area,
wherein
the moisture-proof cover is directly adhered to the sealant, and covers the scintillator layer together with the photo-electric conversion substrate and the sealant.

2. The radiation detector of claim 1, wherein
the moisture-proof cover is metal foil.

3. The radiation detector of claim 1, wherein
the moisture-proof cover forms a space in which the scintillator layer is sealed, together with the photo-electric conversion substrate and the sealant, and
the space is a space depressurized from atmospheric pressure.

4. The radiation detector of claim 1, wherein
the light reflective layer includes a plurality of light scattering particles and a resin-based binder.

5. The radiation detector of claim 4, wherein
the plurality of light scattering particles are formed of metal oxide.

6. The radiation detector of claim 5, wherein
the plurality of light scattering particles are formed of titanium oxide.

7. The radiation detector of claim 1, wherein
the light reflective layer is in contact with the scintillator layer.
